**Europäisches Patentamt**

**European Patent Office**

**Office européen des brevets**

(11) Veröffentlichungsnummer : **0 334 202 B1**

(12) **EUROPÄISCHE PATENTSCHRIFT**

(45) Veröffentlichungstag der Patentschrift :
**15.07.92 Patentblatt 92/29**

(21) Anmeldenummer : **89104676.5**

(22) Anmeldetag : **16.03.89**

(51) Int. Cl.⁵ : **B01D 63/02,** B01D 63/06,
F28F 9/02, // F28F21/06

(54) **Stoff- und/oder Wärmetauscher.**

(30) Priorität : **22.03.88 DE 3809557**

(43) Veröffentlichungstag der Anmeldung :
**27.09.89 Patentblatt 89/39**

(45) Bekanntmachung des Hinweises auf die
Patenterteilung :
**15.07.92 Patentblatt 92/29**

(84) Benannte Vertragsstaaten :
**DE ES FR GB IT NL**

(56) Entgegenhaltungen :
**EP-A- 0 039 055**

(56) Entgegenhaltungen :
**FR-A- 2 200 034**
**FR-A- 2 324 336**
**US-A- 3 415 315**
**US-A- 4 557 322**

(73) Patentinhaber : **Akzo N.V.**
**Postbus 9300 Velperweg 76**
**NL-6800 SB Arnhem (NL)**

(72) Erfinder : **Gemeinhardt, Hermann**
**Rosenstrasse 32**
**W-8753 Obernburg (DE)**

(74) Vertreter : **Fett, Günter**
**Akzo Patente GmbH Kasinostrasse 19 - 23**
**W-5600 Wuppertal 1 (DE)**

## Beschreibung

Die Erfindung beschreibt einen Stoff- und/oder Wärmetauscher, bestehend aus einem Gehäuse, mindestens zwei Rohrböden und einer Vielzahl von Rohren, wobei jedes Rohrende mit einem Rohrboden verbunden ist, die Rohrböden über Gießen am Gehäuse hergestellt und derart ausgebildet sind, daß sie teilweise außerhalb des Gehäuses, besagte Gehäuseöffnungen überdeckend angeordnet sind.

Stoffaustauscher dieser Art sind aus FR-A-2 324 336 bekannt. Hierbei sollen die Rohrböden aus flexiblem Material hergestellt werden. Eine gute Abdeckung wird erst durch einen zusätzlichen O-Ring gewährleistet. Der Nachteil von Rohrböden aus flexiblem Material ist darin zu sehen, daß bei Beaufschlagung mit einem Fluid, insbesondere unter Druck, sich diese Rohrböden durchbiegen, wodurch die Rohre aus ihrer Lage gedrängt werden, wodurch an der Außenseite der Rohre unkontrollierte Strömungsverhältnisse geschaffen werden. Deswegen ist bei dieser Art von Stoff- und/oder Wärmetauschern auch ein zusätzlicher den Rohrboden stabilisierender Kern erforderlich. Die Herstellung solcher Stoffund/oder Wärmetauscher ist also sehr aufwendig.

Es gibt auch Stoff- und/oder Wärmeaustauscher, bei denen die Rohrböden beim Zusammenbau hergestellt werden, indem eine Vergußmasse in die Gehäuseöffnungen eingegossen wird, in welcher die Rohrenden eingebettet werden, und welche anschließend fest wird. Hierzu werden selbsthärtende Gußmassen oder thermoplastische Schmelzen (EP-A-168 558) eingesetzt. Bei dieser Art der Herstellung, die weniger aufwendig ist, lassen sich zwar auch Rohrböden herstellen, die die Gehäuseöffnungen überdecken, doch hat sich herausgestellt, daß infolge der unvermeidlichen Volumenverringerung der Gußmasse beim Festwerden eine Ablösung der Gußmasse vom Gehäuse erfolgt. Eine Abdichtung über Verspannung ist bei dieser Herstellart nicht mehr gewährleistet, weil durch die Ablösung des Rohrbodens von dem Gehäuse eine unebene Oberfläche des Rohrbodens entsteht. Stoff- und/oder Wärmetauscher der eingangs genannten Art mit einer großen Anzahl von Rohren sind deswegen als auf diese Weise nicht herstellbar angesehen worden.

Es ist deshalb Aufgabe der vorliegenden Erfindung, einen Stoff- und/oder Wärmetauscher der eingangs genannten Art zur Verfügung zu stellen, welcher mit geringem Aufwand hergestellt werden kann, und gleichzeitig eine Dichtigkeit zwischen Rohrboden und Gehäuse aufweist, wie sie bisher nur über sehr aufwendige Herstellverfahren gewährleistet werden konnte.

Diese Aufgabe wird gelöst durch einen Stoff- und/oder Wärmetauscher der eingangs genannten Art, welcher sich dadurch auszeichnet, daß zwischen Rohrboden und Gehäuse innerhalb und außerhalb der Gehäuseöffnungen eine Dichtung angeordnet ist.

Durch die Anordnung der Dichtung innerhalb und außerhalb der Gehäuseöffnungen wird bei der Herstellung sicher verhindert, daß die Vergußmasse zwischen Dichtung und Gehäusedringen kann. Die Volumenverringerung beim Festwerden spielt keine Rolle mehr, da durch die Dichtung der Schwund ausgeglichen wird. Durch Verspannen des Rohrbodens mit dem Gehäuse wird im überdeckungsbereich eine gute Abdichtung erreicht.

Bei Gießverfahren, die unter Druck ausgeführt werden, wie beispielsweise Schleuderguß, Vergießen durch Zentrifugieren oder Spritzguß, empfiehlt es sich, daß die Dichtung aus einem elastischen Material besteht. Hierbei wird beim Gießen die Dichtung zusammengepreßt, und dehnt sich beim Festwerden der Vergußmasse wieder aus, so daß der Raum zwischen Gehäuse und dem festgewordenen Rohrboden mit der Dichtung ausgefüllt ist.

Es ist erkennbar, wenn der Rohrboden über Gießen am Gehäuse hergestellt worden ist, weil bei diesem Herstellverfahren die Rohre nicht ganz gleichmäßig angeordnet sind und weil infolge der Überdeckung der Gehäuseöffnung durch den Rohrboden von außen ein vorheriges Herstellen ausgeschlossen ist.

Im Sinne der vorliegenden Erfindung sind unter Rohren auch Hohlfäden und Rohre mit mehreren durchgehenden Hohlräumen zu verstehen.

Die Erfindung wird anhand der nachfolgenden Figur näher erläutert.

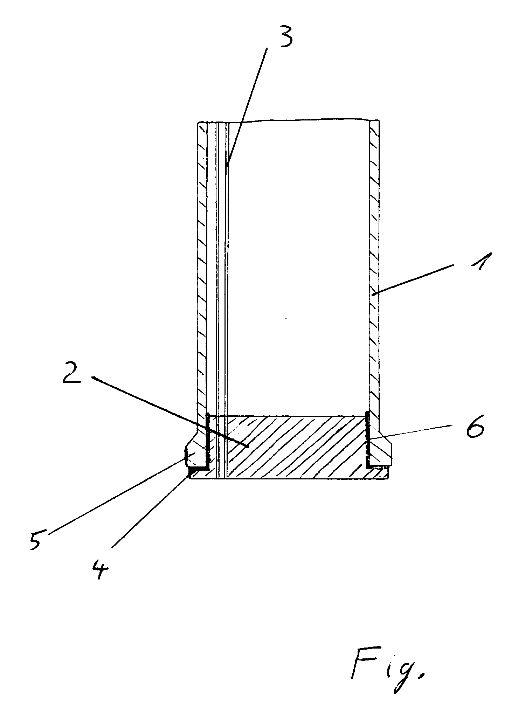

In der Figur ist ein Ausschnitt aus einem erfindungsgemäßen Stoff- und/oder Wärmetauscher dargestellt. Hierbei ist das Gehäuse mit 1, der Rohrboden mit 2 und die Rohre mit 3 bezeichnet. Der Übersichtlichkeit halber ist in der Figur nur eine Gehäuseöffnung mit einem Rohrboden 2 und ein Ausschnitt aus dem Gehäuse 1 sowie lediglich zwei Rohre 3 dargestellt. Die Rohre 3 sind in der Vergußmasse eingebettet, die teilweise innerhalb der Gehäuseöffnung (im Bereich 5) und teilweise außerhalb des Gehäuses, die Gehäuseöffnung überdeckend (Bereich 4) angeordnet ist und den Rohrboden bildet. Zwischen Rohrboden und Gehäuse ist die Dichtung 6 innerhalb (Bereich 5) und außerhalb (Bereich 4) der Gehäuseöffnung angeordnet.

## Patentansprüche

1. Stoff- und/oder Wärmetauscher, bestehend aus einem Gehäuse (1), mindestens zwei Rohrböden (2) und einer Vielzahl von Rohren (3), wobei jedes Rohrende mit einem Rohrboden (2) verbunden ist, die Rohrböden (2) über Gießen am Gehäuse hergestellt und derart ausge bildet sind, daß sie teilweise innerhalb von im Gehäuse vorgesehenen Öffnungen (Bereich 5) und teilweise außer halb des Gehäuses, besagte Gehäuseöffnungen überdeckend (Bereich 4) angeordnet sind, dadurch gekennzeichnet, daß zwischen Rohrboden (2) und Gehäuse (1) innerhalb und außerhalb besagter Gehäuseöffnungen eine Dichtung (6) angeordnet ist, welche Dichtung (6) den Rohrboden (2) gegen das Gehäuse (1) abdichtet.

2. Stoff- und/oder Wärmetauscher nach Anspruch 1, dadurch gekennzeichnet, daß die Dichtung (6) aus einem elastischen Material besteht.

## Claims

1. Substance and/or heat exchanger, comprising a housing (1), at least two tube sheets (2) and a plurality of tubes (3), with each tube end being connected to a tube sheet (2) and with the tube sheets (2) being manufactured by casting on the housing and being so constructed that they are disposed partially inside of openings provided in the housing (region 5) and partially outside of the housing so as to overlap said housing openings (region 4), characterized in that a seal (6) is disposed between tube sheet (2) and housing (1) inside and outside of said housing openings, said seal (6) sealing off the tube sheet (2) from the housing (1).

2. Substance and/or heat exchanger according to claim 1, characterized in that the seal (6) is made of an elastic material.

## Revendications

1. Echangeur de substances et/ou de chaleur composé d'un corps (1), d'au moins deux plaques tubulaires (2) et d'une pluralité de tubes (3), chaque extrémité de tube étant liée à une plaque tubulaire, (2), les plaques tubulaires (2) étant réalisées par moulage sur le corps et étant agencées de manière telle qu'elles se trouvent partiellement dans des ouvertures prévues à l'intérieur du corps (zone 5) et partiellement à l'extérieur du corps et recouvrent lesdites ouvertures du corps (zone 4), caractérisé en ce qu'un joint (6) est monté à l'intérieur et à l'extérieur desdites ouvertures du corps entre la plaque tubulaire (2) et le corps (1), lequel joint (6) assure l'étanchéité entre la plaque tubulaire (2) et le corps (1).

2. Echangeur de susbtances et/ou de chaleur selon la revendication 1, caractérisé en ce que le joint (6) est réalisé en un matériau élastique.

Fig.